# EUROPÄISCHE PATENTANMELDUNG

(11) **EP 3 708 447 A1**
(43) Veröffentlichungstag der Anmeldung: **16.09.2020**
(21) Anmeldenummer: 19000126.3
(22) Anmeldetag: 13.03.2019
(51) Int. Cl.: B60T 1/14, B60T 8/32

(54) **NEUERUNGEN DER WALZENBREMSE AUS FÜR MEHRRÄDRIGE FAHRZEUGE**

(71) Anmelder: Schielke, Günter, 82285 Hattenhofen (DE)
(72) Erfinder: Schielke, Günter, 82285 Hattenhofen (DE)

(57) **Zusammenfassung**

Walzenbremse für ein Fahrzeug, mit einer Walze und einem Anti-Blockier-System (ABS) für die Walze, wobei eine Elektronik das Radgeschwindigkeitssignal des ABS-Sensors des Fahrzeugs mit dem Geschwindigkeitssignal eines Tachogenerator (s) oder eines mit der Walze verbundenen Elektromotors (w) vergleicht, und wobei, wenn die Elektronik eine Radbewegung feststellt und der Tachogenerator (s) oder Elektromotor (w) der Walze 0 anzeigt, Scheibenbremsen an der Achse der Walze durch ein Magnet-Abschaltventil (r) mittels der Elektronik abgeschaltet werden, bis am Tachogenerator (s) oder am Elektromotor (w) wieder ein Geschwindigkeitssignal anliegt.

## Beschreibung

### Bezeichnung

Neuerungen bei der Walzenbremse auch für mehrrädrige Fahrzeuge.

### Problemstellung

Bei Glatteis ist eine sichere Bremsung durch normale Winterreifen nicht gewährleistet.

### Stand der Technik

In einigen Anmeldungen wird versucht, dieses Problem zu lösen. Die Walzenbremse an sich ist eine alte Idee, die bereits vor 100 Jahren zum Patent angemeldet wurde. Amerikanisches Patent Nr.: 1,236,971 vom 14. August 1917 zeigt eine Walzenbremse, die über Hebel und Bremspedal betätigt wird
Das amerikanische Patent Nr.: 2,650,679 vom 1. September 1953 zeigt eine Walze, die mittels Hydraulik-Zylinder und Hydraulik-Stempel auf die Fahrbahn abgesenkt wird. Mit einer Kardan-Welle ist diese Walze mit dem Bremssystem verbunden.
Das französische Patent Nr.: 2 792 272 vom 19.04.1999 beschreibt eine Walzenbremse die mit Seilen betätigt wird und 2 Scheibenbremsen enthält.

Die deutsche Patentschrift Nr.: 34 39 517.2 vom 29. Oktober 1984 beschreibt eine Walzenbremse, die hydraulisch abgesenkt werden kann und über eine mechanische Verbindung (Kardanwelle) mit der Bremse oder dem Motor verbunden ist. Die Absenkung der Walze (Rad) erfolgt durch einen BetätigungsKnopf oder einen Radsensor (ABS).
Das deutsche Gebrauchsmuster Nr.: G 87 05 368.3 vom 10.04.1987 zeigt ein Rad (Walze) das mit einer Schneekette bestückt ist, durch einen Hebel auf die Straße gedrückt wird und mittels eines Hydraulik-Zylinders abgebremst wird. Besonderheit ist eine Verbindung mit der Lenkung.
Das deutsche Gebrauchsmuster Nr.: 20 2004 006 239 vom 20.04.2004 beschreibt einen Bremskörper der mittels Hydraulik-Zylinder und Hydraulik-Stempel auf die Fahrbahn abgesenkt werden kann. Dabei kann der Bremskörper auch eine Walze sein. Die Auslösung kann auch elektronisch sein.

Die deutsche Patentschrift Nr.: 10 2004 058 354 A1 zeigt ein Raupensystem, das sich zur Bremsung entgegengesetzt zur Fahrtrichtung bewegt. Es wird hydraulisch abgesenkt und kann um 90 Grad geschwenkt werden. Die Auslösung erfolgt mit einem Knopf am Armaturenbrett.

### Die Walzenbremse mittels Hydraulik auszufahren ist Stand der Technik.

In dem deutschen Patent Aktz: 10 2014 003 830.0
wird eine Lösung des Problems beschrieben, indem eine Elektronik - Einheit die Signale von elektronischem ABS mit dem elektronischen Thermometer auswertet.
Bei einer Temperatur unter + 2 Grad Celsius und gleichzeitigem blockieren der Räder bei geringem Bremsdruck wird ein Magnetumschaltventil aktiviert, das die Bremsflüssigkeit von den Radzylindern zu einem Hydraulik-Zylinder umschaltet. Der Kolben (im weiteren Stempel genannt) bewegt die Walze mit Spikes auf die Straße. Gleichzeitig wird die Walzenachse durch Scheibenbremsen gebremst.
Wenn der Fahrer das Bremspedal loslässt, ziehen Rückholfedern die Walze wieder nach oben,

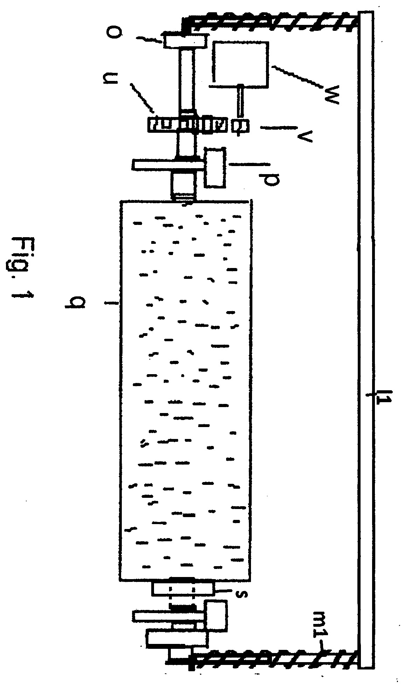

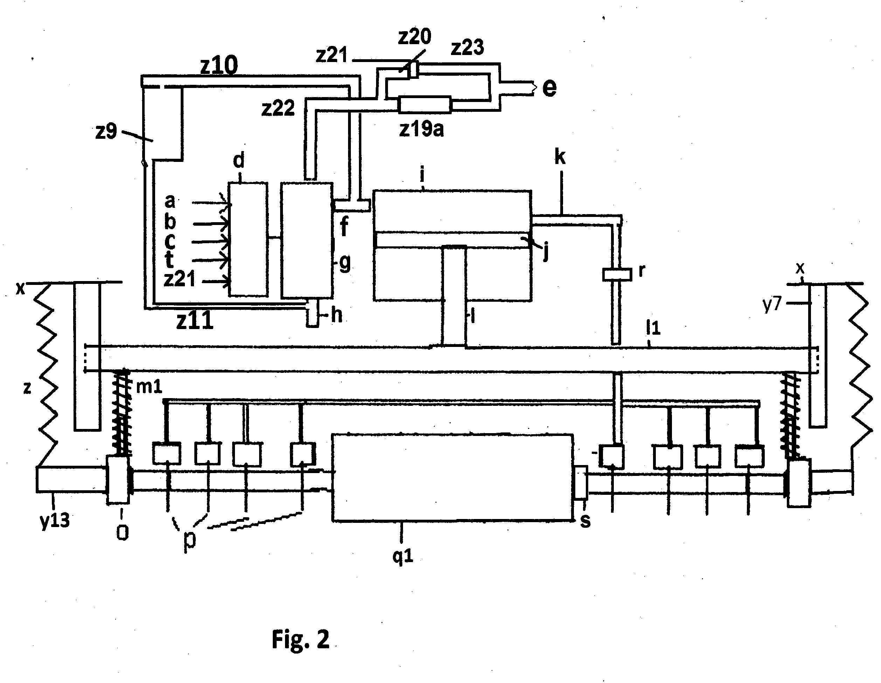

Das Gebrauchsmuster Aktz:20 2018 001 722.
beschreibt genau die Anfahrhilfe.
Das Paten Nr.: 10 2014 003 830.0 enthält eine Option, die nicht näher ausgeführt ist. (Anfahrhilfe).
Diese Dokument erläutert eine Ausführung der Anfahrhilfe.
Zum aktivieren der Anfahrhilfe drückt man eine Taste "Anfahrhilfe" und tritt auf die Bremse. Dadurch wird die Walze wieder ausgefahren. Die Taste "Anfahrhilfe" wird vom Computer abgefragt. Eine weitere Taste entscheidet, ob vorwärts oder rückwärts gefahren werden soll.
Damit die Anfahrhilfe funktionieren kann, muss die Bremsflüssigkeit zu den Scheibenbremsen der Walze durch ein Magnet-Abschaltventil abgeschaltet werden. (r in Fig.2).
Gleichzeitig muss der Elektromotor w eingeschaltet werden. (Siehe Fig. 1) Dadurch setzt sich
das Fahrzeug langsam in Bewegung. Nach ca. 30 Sekunden oder wenn der Tachometer eine Geschwindigkeit von mindestens 10 Km/h anzeigt, wird der Elektromotor abgeschaltet. Während dieses Vorgangs
muss die ganze Zeit die Bremse getreten sein. Wenn der Wagen rollt, kann die Bremse losgelassen werden und versucht werden anzufahren.
Sobald die Walze wieder oben ist, wird der Elektromotor abgeschaltet.

### Neuerungen bei der Walzenbremse auch für mehrräderige Fahrzeuge

1 Mit einem **Tachogenerator** (**s** in Fig. 1) an der Walzenachse kann ein ABS für die Walze verwirklicht werden. In dem man das Signal des Rad - ABS mit dem Signal des Tachogenerators vergleicht. Wenn das Rad - ABS eine Rad Bewegung feststellt, und der Tachogenerator der Walzenachse 0 anzeigt, müssen die Scheibenbremsen der Walzenachse kurzzeitig abgeschaltet werden. Dazu ist ein **Magnetabschaltventil (Bezugszeichen r in** **Fig. 2****) nötig.**
   Sobald der Tachogenerator wieder ein Signal anzeigt, muss das Magnetabschaltventil wieder deaktiviert werden d.h. Es wird wieder gebremst. Die Schaltzeiten müssen durch Versuche ermittelt werden. (ca. 100 - 500ms)
   Statt des Tachogenerators kann man unter Umständen auch den **Elektromotor w** für die Signal Erzeugung der Walze verwenden.
   Das ABS ist für Kurvenfahrten sehr wichtig.
   Das Magnet-Abschaltventil r wird im Gebrauchsmuster Akz.: 20 2018 001 722. bereits für die Anfahrhilfe verwendet.

Bei einem Elektroauto muss bei einer Glatteis - Bremsung die Rekuption abgeschaltet werden, weil in diesem Fall die Räder nicht gebremst werden dürfen.

Die Walze kann, falls mit Spikes bestückt, statt dessen mit einer weichen Gummimischung (sog. Haftreifen) überzogen werden.
Bei normalen Autoreifen ist diese Gummimischung zu sehr dem Verschleiß unterworfen, da die Walze aber seltener benutzt wird, scheint mir diese Lösung sinnvoll. Dadurch wird ein übermäßiger Verschleiß der Fahrbahn gänzlich vermieden.
Aus diesem Grund sollten, falls doch Spikes verwendet werden, diese nur sehr kurz sein.

### 2 Verwendung der Walze als Zusatzbremse.

Wenn das Magnetumschaltventil g durch ein **zusätzliches Magnetschaltventil (z9 in** **Fig 2****)** überbrückt wird und die **Walze Gummiüberzug mit Profil** hat, kann man das Walzen - system als Zusatzbremse verwenden. Dadurch würde der Bremsweg verkürzt werden.
Die Auslösung kann durch den Fahrer mit einen Taster am Armaturenbrett oder automatisch durch ein Fahrer - Assistenzsystem erfolgen.

### 3. Gestaltung der Walzenaufhängung

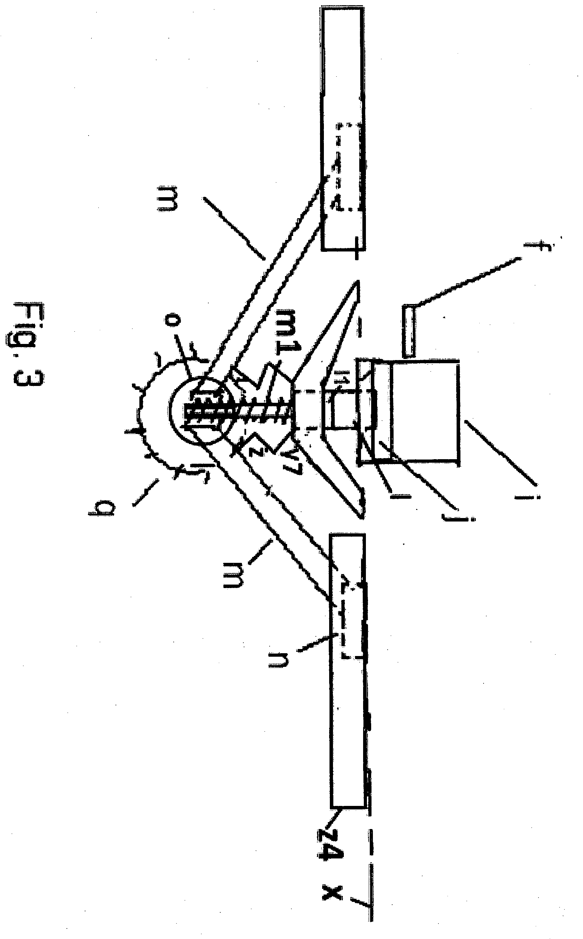

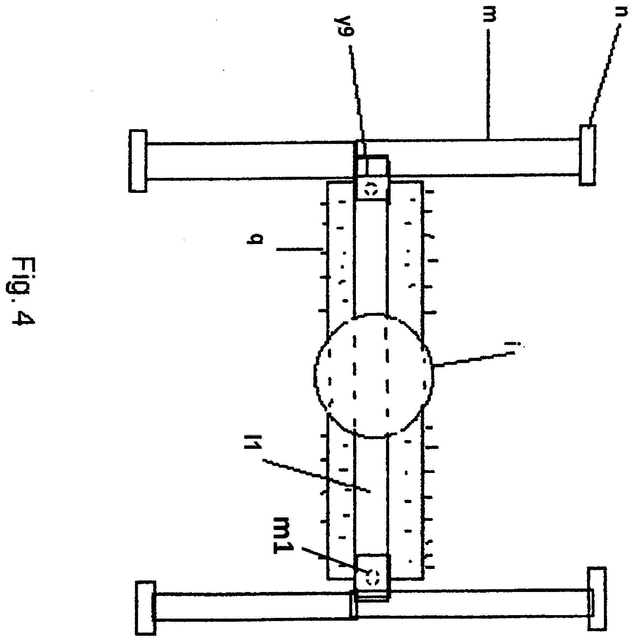

Fig. 3 beschreibt eine Aufhängung der Walze mit Auhängungsarmen m und als **Neuerung mit Federbeinen ml.** Eingezeichnet ist auch die Schiene z4 mit dem Gleitscharnier n. Als **Neuerung** ist noch eine **Führung des Stempelbalken durch die U - Schiene y7** vorhanden. Sie soll vorwärts oder rückwärtiges wegrutschen des Stempelbalkens 11 verhindern. Fig. 4 beschreibt dieselbe Aufhängung als Draufsicht. In ihr ist y7 nicht gezeichnet.

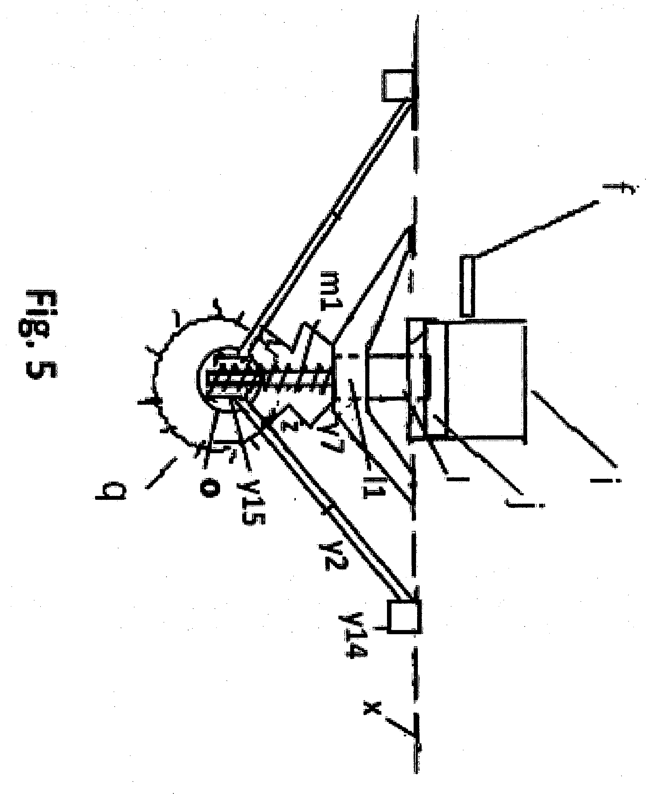

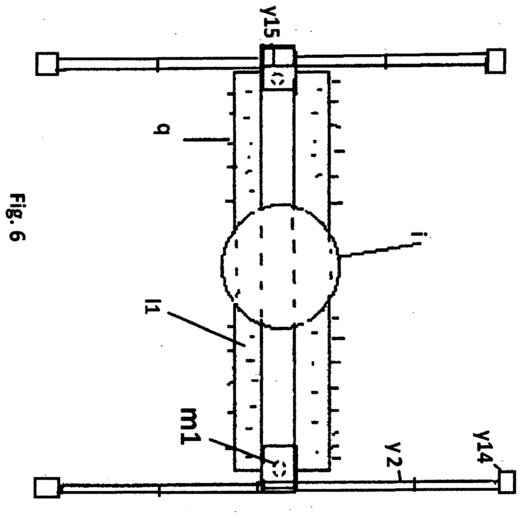

Für die Walzenaufhängung wären auch **Teleskop Aufhängungen** denkbar. Der Aufhängungsarm m und das Gleitscharnier n wird durch die **Teleskopstange y2** und dem **Gelenk y14** ersetzt. Auch hier wären die **Federbeine ml** und die **U - Schiene y7** sinnvoll. Es könnten die Schiene z4 und das Gleitscharnier n entfallen.
Siehe Fig.5 Fig, 6

In Fig.2, Fig 7 und Fig. 8 ist eine einfachere Aufhängung dargestellt. Die **Federbeine m1** tragen über das Achslager o die Walzenachse. Hier ist die **Führung y7** des Stempelbalkens 11 unbedingt erforderlich.
Über die **Achsverlängerung y13** greifen die Rückholfedern z an.

### 4. Aufbau der Walzenachse

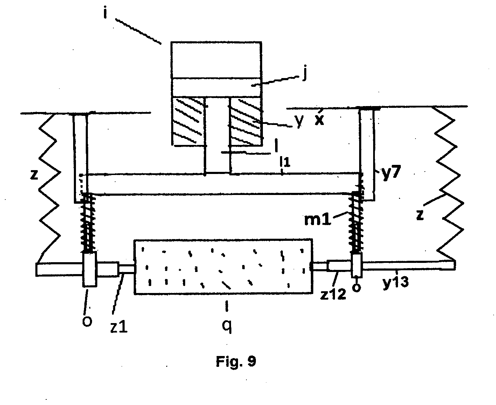

Damit man die Walze auswechseln kann, ist die Walzenachse dreigeteilt.
1. Einer **Hohlachse z12** mit den Scheibenbremsen p und dem Zahnrad u, sowie den Elektromotor w, v für das kleine Zahnrad.
2. Die innere Achse mit der Walze q und mit dem **Tachogenerator** s und dem **Verbindungsloch z14.**
3. **Der 2. Hohlachse mit dem Verbindungsloch z14** sowie den restlichen Scheibenbremsen. Siehe Fig. 9

### 5. Aufbau der Walze

Bisher bin ich beim Walzenmaterial von einer Metallwalze mit eingesetzten Spikes oder einem Gummiüberzug ausgegangen. In der **Gummiausführung** könnte man die Walze auch als **zusätzlichen Reifen** betreiben; d.h. die Walze ganz aus Gummi herstellen mit den üblichen Reifenschichten, Profil und mit Luft befüllen.

### 6. Für LKW

Für LKW wäre die Walze ob mit Haftgummi oder Spikes bestückt, eine wahre Hilfe bei Glatteis. Allerdings müsste auch der Anhänger mit einer oder mehren Walzen ausgestattet sein.
Im Winter diesen Jahres (Januar 2019) sah ich im Fernseher einen Lastzug, dessen Fahrer den Anhänger abkoppelte und daraufhin der Anhänger von der glatten Fahrbahn nach rechts in den Graben rutschte. Dies wäre zu verhindern gewesen, wenn der Anhänger mit Glatteis - Walzen bestückt gewesen wäre und am Anhänger ein Knopf zum Auslösen der Walzen und einer Handbremse für die Walzen vorhanden gewesen wäre. (Elektronische Handbremse.)

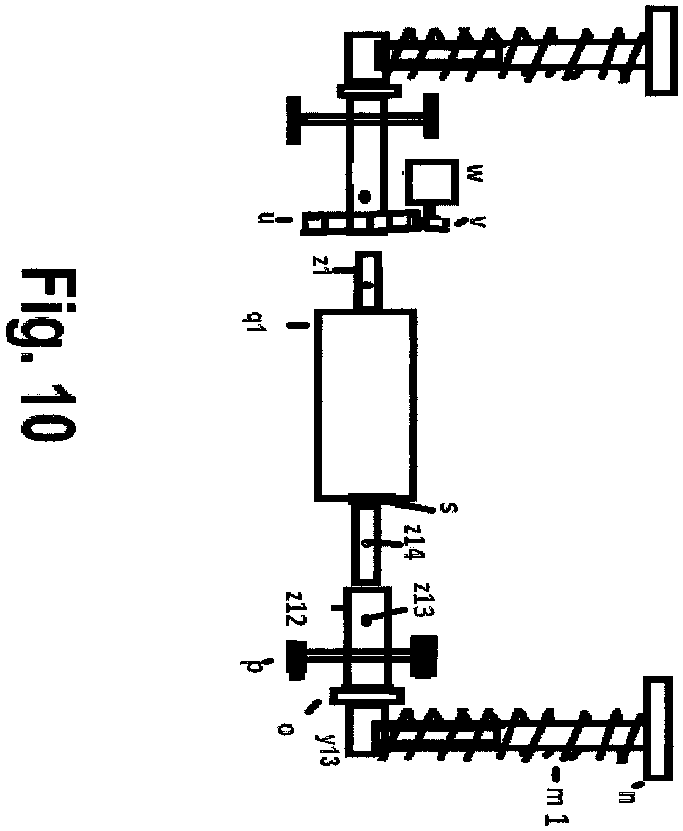

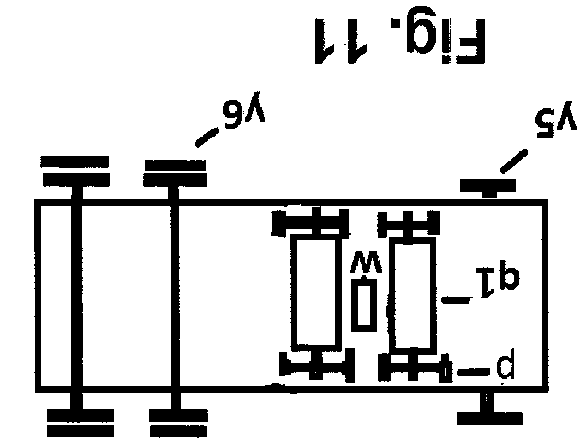

Für LKW mit großer Bodenfreiheit empfiehlt sich eine **Tandem** - **Anordnung größerer Walzen,** mit einem **Durchmesser von 20 bis 25** Zentimetern und einer **Länge von 120 Zentimetern.** (siehe q in Fig. 10) Die Walzen wären jeweils mit 2 - 4 Scheibenbremsen bestückt. Als Aufhängungsarme sollten kräftige Federbeine dienen. Als Walzenlager sollte jeweils ein kräftiges Kugellager verwendet werden. In Fig. 10 ist ein 3 - Achsen LKW dargestellt, in Fig. 11 ein 4 - Achsen LKW. (Sicht von unten.

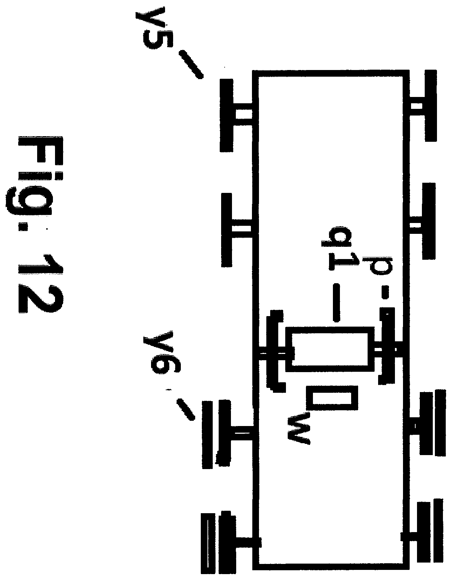

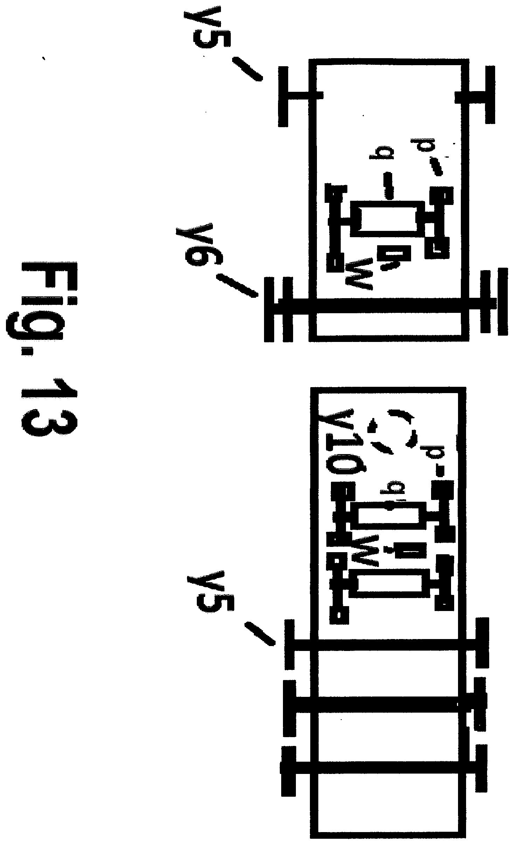

Fig. 12 zeigt einen Sattelschlepper mit Anhänger und 5 KW Elektromotor.
**Neu** ist, dass auch der Anhänger mit **Walzen und Elektromotor** ausgerüstet ist.
Im Fall der 5 KW Elektromotoren werden die Elektromotoren nur zur Anfahrhilfe bei Glatteis verwendet.
Die Betriebsspannung hierfür wird aus dem Bordnetz entnommen und beträgt 24 - 48 Volt. Da die Betriebsdauer wie beim Anlassen nur wenige Sekunden dauert, sollte dies die normale Batterie verkraften können.

### 7 Walzenumschaltung

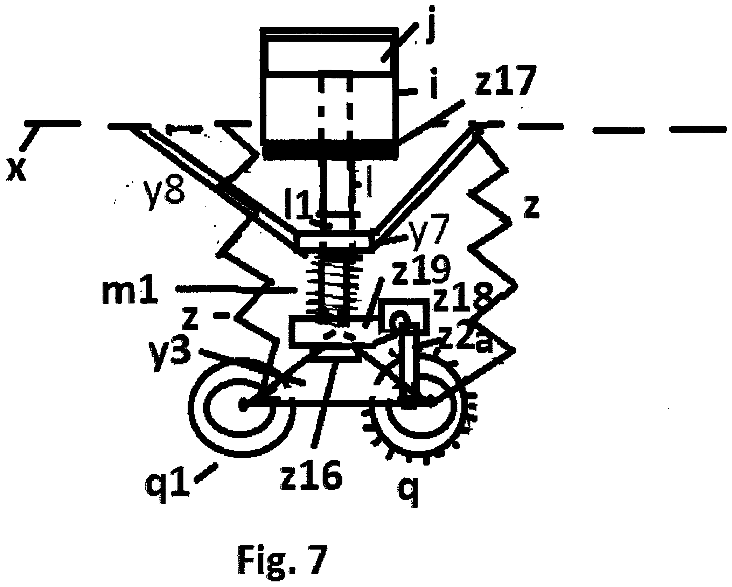

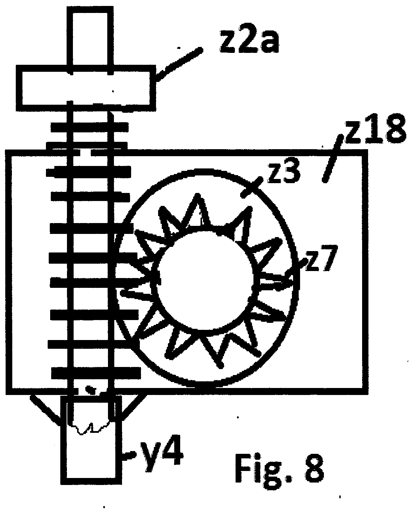

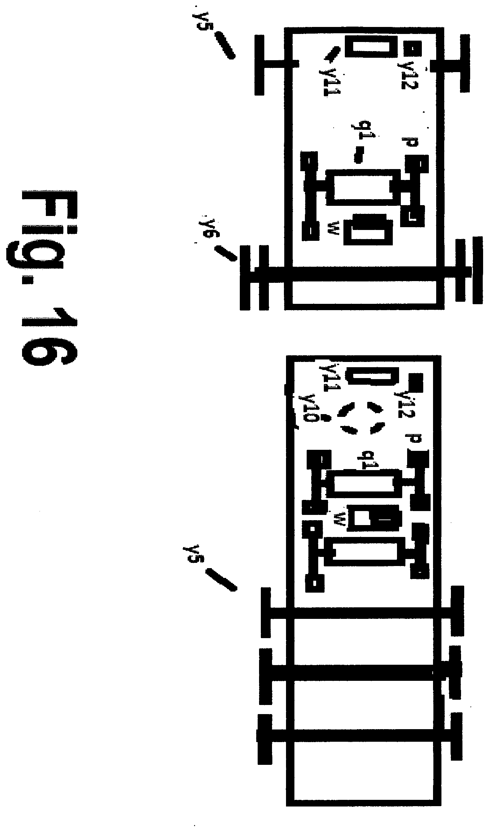

Fig. 7 ist in erster Linie für LKW gedacht, da hier eine größere Bodenfreiheit notwendig ist.
Wenn eine Walze mit einer Gummimischung überzogen ist, und die andere mit Spikes bestückt ist, kann mit einer Anordnung nach Fig. 7 und 8 entweder die Walze mit der Gummimischung oder beide Walzen auf der Straße aufliegen.
Wenn nur die Walze mit der Gummimischung Kontakt mit der Straße hat, kann die Walze als Zusatzbremse oder bei einem LKW als Berganfahrt - Hilfe benützt werden (siehe Fig. 16).
Wenn sich der **Elektromotor z3** nach links bewegt, wird über das **Zahnrad z7 die Zahnstange z2a** nach oben bewegt.

Dadurch kippt die **Dreiecksplatte y3** und nur die Walze mit der Gummimischung hat Kontakt mit der Straße. Bewegt sich der Motor z3 nach rechts, so liegen beide Walzen auf der Straße auf und sind für die Glatteisbremsung bereit.
**Die Führung der Zahnstange z2a ist y4. Siehe** **Fig. 8**
Um nur die Gummiausführung wirken zulassen, muss der Fahrer einen Knopf am Armaturenbrett bedienen.
Die Umschaltung auf beide Walzen könnte automatisch durch die Glatteis - Elektronik erfolgen.

### 8. Bus etc.

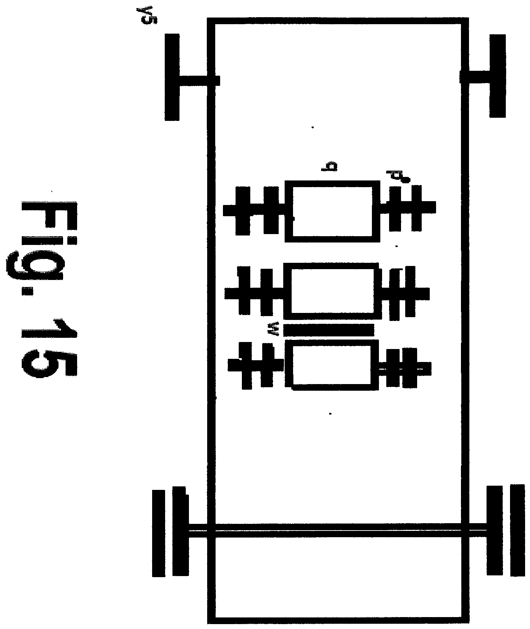

Für schwere Fahrzeuge mit geringerer Bodenfreiheit kann man eine 3 - fache Walzen - Anordnung mit einem Durchmesser von ca. **8 - 10 Zentimetern** und einer Länge von **120 Zentimetern** verwenden. Ich denke hier an einen Bus oder andere Fahrzeuge. Fig. 15..

### 9. Sportwagen

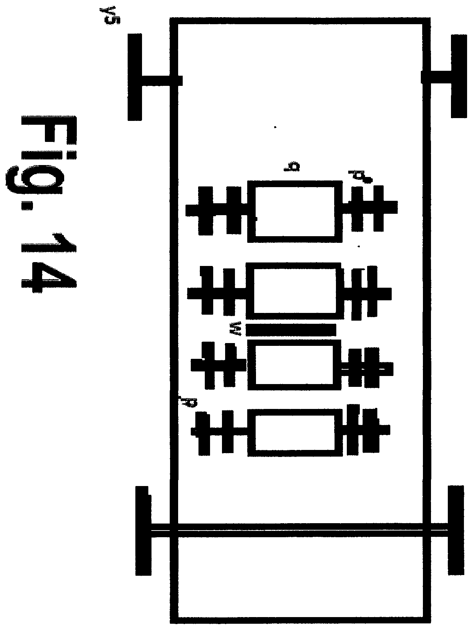

Eine High - Tec Ausführung für Sportwagen besteht aus **4 - 5 Walzen** mit einem **Durchmesser** von ca. **40 mm.** Die Walzen wären **ca. 60 - 80 cm lang.** Wegen der geringen Bodenfreiheit des Sportwagens müsste der Wagenboden im Bereich der Walze um **ca. 30 - 40 cm angehoben** bzw. nach innen eingebeult werden um die Walze mit ihren Aufhängungen unterzubringen.. Durch die geringe Bodenfreiheit wäre der **Hub des Hydraulik - Stempels (- Kolbens) sehr kurz. Dies würde die Reaktionszeit der Walzenbremse verkürzen.** Um das Gewicht zu reduzieren, wären die **meisten Teile der Walzenbremse aus Kohlefaser verstärktem Verbundwerkstoff wie in der Formel 1**. Fig. 14.

### 10. Ausblick

Fig. 16 stellt einen Sattelschlepper mit Anhänger
und jeweils 50 KW Elektromotor dar.
Für die 50 KW Elektromotoren wird eine 400 Volt Betriebsspannung benützt. Ein Teil der dafür nötigen großen Batterien könnte im Anhänger untergebracht werden.
Bei dieser Leistung müssen die **Elektromotoren mit Öl gekühlt werden** und benötigen einen **Ölkreislauf mit Ölkühler und Ölpumpe.**

In dieser Ausführung und wenn die Walzen mit Gummimischung überzogen sind, können die Walzen zur Unterstützung bei der Berganfahrt genützt werden.
Damit der Fahrer nicht ständig das Bremspedal treten muss,
um die Walze auszufahren, wird vom Fahrer über einen Knopf am Armaturenbrett ein **Magnetschaltventil z19**, dass das Bremspedal überbrückt, eingeschaltet.
Die Elektronik muss dabei das Umschaltventil g auf Walzenbremsung stellen. Die Magnetschaltventile r und y9 müssen abgeschaltet sein. Eventuell muss das Signal vom ABS simuliert werden.
Ein elektrisches Signal geht vom Bremspedal in die Elektronik - Einheit. Eine **Vorrangschaltung setzt alle Magnetschaltventile in die Normalstellung zurück, sobald das Bremspedal betätigt** wird.

### Bezugszeichenliste

a = Signal vom ABS
b = Signal vom Thermometer
c = Signal vom Tacho
d = Elektronik-Einheit
e = Bremsflüssigkeit Zulauf
f = Bremsflüssigkeit zum Hydraulik-Zylinder
g = Umschalt-Magnetventil
h = Bremsflüssigkeit zu den Radzylindern
i = Hydraulik-Zylinder
j = Hydraulik-Stempel
k = Bremsflüssigkeitsleitungen zu den Scheibenbremsen
l = Hydraulik Stempelachse
l1 = Stempelbalken
m = Aufhängung
m1 = Aufhängung mit Federbein
n = Scharnier der Aufhängung / Gleit-Scharnier
o = Achslager
p = Scheibenbremsen
q = Spikeswalze
q1 = Gummiwalze mit Profil
r = Magnetschaltventil
s = Tachogenerator
t = Signal vom Tachogenerator
u = großes Zahnrad
v = kleines Zahnrad
w = Elektromotor
x = Wagenboden
y = Dichtung
y2 = Teleskopstange
y3 = Dreieckplatte für Walzen
y4 = Führung für z2a
y5 = Räder
y6 = Doppelräder
y7 = Führung für Stempelbalken
y8 = Aufhängung von y7 am Wagenboden
y9 = Gelenk von m
y10 = Sattelaufhängung
y11 = Ölkühler
y12 = Ölpumpe
y13 = Verlängerung von Lager o
y14 = Gelenk am Wagenboden
y15 = Gelenk am Walzenlager
z= Rückhol - Feder
z1 = Achse der Walze
z2a = kurze Schaltstange mit Kragen und Zahnstange
z3 = Motor
z4 = Schiene für das Gleit-Scharnier n
z7 = Zahnrad
z9 = Magnetschaltventil zwischen Hydraulik-Zylinder und Rad-Bremszylindern
z10 = Leitung vom Hydraulik-Zylinder zum Magnetschaltventil
z11 = Leitung vom Magnetschaltventil und Rad-Bremszylindern
z12 = Hohlachse
z13 = Bohrung in Hohlachse für Bolzen
z14 = Bohrung in Walzenachse für Bolzen
z16 = Gelenk
z17 = Bodenplatte des Zylinders
z18 = Motorplatte
z19 = fester Träger
z 19a = Überbrückungsventil Bremspedal
z 20 = Bremspedal
z 21 = Signal vom Pedal
z 22 = Leitung vom Bremspedal z 20 und Überbrückungsventil z 19 zum Magnetumschaltventil g
z 23 = Leitung vom Eingang e zum Bremspedal z 20 und dem Überbrückungsventil z 19

## Patentansprüche

**.** Anti - Blockier - System ABS für die Walze, **dadurch gekennzeichnet, dass** die Elektronik das Signal des Rad - ABS mit dem Signal eines Tachogenerator s oder des Elektromotors w vergleicht.
Wenn das Rad - ABS eine Bewegung feststellt und der Tachogenerator s 0 anzeigt, werden die Scheibenbremsen an der Walzenachse durch ein Magnet-Abschaltventil r abgeschaltet, bis am Tachogenerator s oder am Elektromotor w wieder ein Signal anliegt.

**.** Zusatzbremse
**Dadurch gekennzeichnet, dass** ein zusätzliches Magnet-Schaltventil y9, dass das Umschalt-Magnetventil g überbrückt, und die Walze eine Gummiausführung aufweist.

**.** Walzenaufhängung
1. mit Schiene z4, Gleitscharnier n und Aufhängungsarm m,
**dadurch gekennzeichnet, dass** zusätzlich kurze Federbeine m1 sowie eine U - förmige Schiene y7 als Führung für den Stempelbalken 11 verwendet wird.
2. Walzenaufhängung mit kurzen Federbeinen m1 sowie die Schiene y7als Führung für den Stempelbalken 11. **Dadurch gekennzeichnet, dass** die Teleskopstangen y2 und die Gelenke y14 die Aufhängung bilden. Die Teile z4, n und m können entfallen.
3. Walzenaufhängung mit nur 2 Teilen, **dadurch gekennzeichnet, dass** nur die Federbeine m1 und die U - Schiene y7 verwendet werden.

**.** Aufbau der Walzenachse , **dadurch gekennzeichnet, dass** die Walzenachse aus 3 Achsenteilen besteht. 2 Hohlachsen mit jeweils den Scheibenbremsen, sowie einem Elektromotor und die Walze mit den inneren Achsenteilen.

**.** Aufbau der Walze, **dadurch gekennzeichnet, dass** die innere Walze aus Metall besteht, der Überzug aus Gummi mit eingesetzten Spikes oder wie ein Reifen aus einigen Schichten und weichem Gummiausführungen sowie Luft besteht.

**.** Für LKW, **dadurch gekennzeichnet, dass** auch der Anhänger Walzen mit Elektromotor bekommt.

**.** Walzenumschaltung, in der eine Dreiecksplatte
zwei Walzen trägt, eine Walze mit Gummiausführung und eine mit Spikes, **dadurch gekennzeichnet, dass** eine Zahnstange y2a durch einen Elektromotor mit Zahnrad die Dreiecksplatte kippt.

**.** Walzenbremse bei einem Sportwagen, **dadurch gekennzeichnet, dass** die meisten Teile aus Kohlefaser verstärktem Kunststoff sind.

**.** LKW mit Walzen für Zugmaschine und Anhänger,
mit Elektromotoren mit jeweils 50 KW Leistung, **dadurch gekennzeichnet, dass** die Elektromotoren durch einen Ölkreislauf mit Ölkühler gekühlt werden.

## Geänderte Patentansprüche

### Geänderte Patentansprüche gemäss Regel 137(2) EPÜ.

1. Walzenbremse für ein Fahrzeug, mit einer Walze und einem Anti-Blockier-System (ABS) für die Walze, wobei eine Elektronik das Radgeschwindigkeitssignal des ABS-Sensors des Fahrzeugs mit dem Geschwindigkeitssignal eines Tachogenerators (s) oder eines mit der Walze verbundenen Elektromotors (w)vergleicht, und wobei, wenn die Elektonik eine Radbewegung feststellt und der Tachogenerator (s) oder der Motor (w) der Walze 0 anzeigt, Scheibenbremsen an der Achse der Walze durch ein Magnet-Abschaltventil (r)mittels der Elektronik abgeschaltet werden, bis am Tachogenerator (s) oder am Elektromotor (w) wieder ein Geschwindigkeitssignal anliegt.

2. Walzenbremse nach Anspruch 1 mit weiter einer Zusatzbremse, wobei ein zusätzliches Magnet-Schaltventil (z9), dass ein Umschalt-Magnetventil (g) überbrückt, vorgesehen ist, und die Walze eine Gummiausführung aufweist.

3. Walzenbremse nach Anspruch 1 mit zusätzlich einer Walzenaufhängung, wobei die Walzenaufhängung eine Schiene (z4), ein Gleitscharnier (n), einen Aufhängungsarm (m), kurze Federbeine (m1) sowie eine U-förmige Schiene (y7) als Führung für einen Stempelbalken (11) umfasst.

4. Walzenbremse nach Anspruch 1 mit zusätzlich einer Walzenaufhängung mit kurzen Federbeinen (m1) sowie einer Schiene (y7) als Führung für einen Stempelnalken (11), wobei Teleskopstangen (y2) und Gelenke (y14) die Walzenaufhängung bilden.

5. Walzenbremse nach Anspruch 1 mit zusätzlich einer Walzenaufhängung, wobei die Walzenaufhängung nur Federbeine (m1) und U-Schienen (y7) aufweist.

6. Walzenbremse nach Anspruch 1, wobei die Walzenachse aus drei Achsenteilen besteht, nämlich zwei Hohlachsen mit jeweils den Scheibenbremsen und/oder dem Elektromotor und die Walze mit ihren inneren Achsenteilen.

7. Walzenbremse nach Anspruch 1, wobei die Walze als eine innere Walze aus Metall mit einem Überzug aus Gummi mit eingesetzten Spikes oder aus einigen Schichten mit weichen Gummiausführungen mit Luft besteht.

8. Walzenbremse nach Anspruch 1 mit einer weiteren, zweiten Walze, wobei die Walzen von einer Dreiecksplatte getragen werden, wobei eine Walze mit Gummi und die andere Walze mit Spikes ausgeführt ist, und wobei eine Zahnstange (y2a) durch einen Elektromotor mit Zahnrad angetrieben wird und die die Dreiecksplatte kippt.

9. Die Anwendung der Walzenbremse nach einem der Ansprüche 1 bis 8 in einem aus Zugfahrzeug und Anhänger bestehenden LKW, wobei die Walzenbremsen auch am Anhänger angeordnet sind.

10. Die Anwendung mehrerer Walzenbremsen nach einem der Ansprüche 1 bis in einem aus Zugfahrzeug und Anhänger bestehenden LKW, wobei jeder der Elektromotoren eine Leistung von 50 KW hat und jeder Elektromotor durch einen Ölkreislauf mit Ölkühler gekühlt wird.

11. Die Anwendung der Walzenbremse nach einem der Ansprüche 3 bis 6 in einem Sportwagen, wobei die meisten Teile der Walzenbremse aus Kohlefaser verstärktem Kunststoff hergestellt sind.
